# EUROPÄISCHE PATENTSCHRIFT

(11) **EP 1 395 415 B1**
(45) Veröffentlichungstag und Bekanntmachung des Hinweises auf die Patenterteilung: **22.12.2010**
(21) Anmeldenummer: 02735284.8
(22) Anmeldetag: 23.04.2002
(51) Int. Cl.: B29C 51/00, B65D 75/36, C08J 5/18

(54) **VERFAHREN ZUR HERSTELLUNG VON BIOLOGISCH ABBAUBAREN VERPACKUNGEN AUS BIAXIAL VERSTRECKTEN FOLIEN UND DERARTIGE VERPACKUNGEN**
METHOD FOR THE PRODUCTION OF BIOLOGICALLY-DEGRADABLE PACKAGINGS MADE FROM BIAXIALLY-DRAWN FILMS AND SUCH PACKAGINGS
PROCEDE POUR PRODUIRE DES EMBALLAGES BIODEGRADABLES A PARTIR DE FILMS A ETIREMENT BIAXIAL ET DE TELS EMBALLAGES

(30) Priorität: 30.04.2001 DE 10121151
(43) Veröffentlichungstag der Anmeldung: 10.03.2004
(73) Patentinhaber: Treofan Germany GmbH & Co.KG, 66539 Neunkirchen (DE)
(72) Erfinder: ROSENBAUM, Marlies, 66359 Bous (DE); BUSCH, Detlef, D., 66740 Saarlouis (DE)
(86) Internationale Anmeldenummer: PCT/EP2002/004443
(87) Internationale Veröffentlichungsnummer: WO 2002/087851

(56) Entgegenhaltungen:
- WO-A-00/05068
- WO-A-92/04412
- DE-A- 19 830 389
- JP-A- 09 174 674
- US-A- 5 849 374
- US-A- 6 153 276
- PATENT ABSTRACTS OF JAPAN vol. 1998, no. 10, 31. August 1998 (1998-08-31) & JP 10 120890 A (DAICEL CHEM IND LTD), 12. Mai 1998 (1998-05-12)

## Beschreibung

Die vorliegende Erfindung betrifft ein Verfahren zur Herstellung von tiefgezogenen Verpackungen, ausgehend von einer biaxial verstreckten Folie. Ferner betrifft die Erfindung derart hergestellte Verpackungen. Gegebenenfalls sind diese tiefgezogenen Verpackungen biologisch abbaubar. Die Verwendung von Kunststoffverpackungen hat in den letzten Jahrzehnten erheblich zugenommen. Kunststoffverpackungen bieten Schutz gegen Feuchtigkeit und Schmutz, sichern Hygiene, ein attraktives Aussehen und schützen das verpackte Gut vor Mißbrauch bei vergleichsweise geringem Materialeinsatz. Die Entsorgung dieser Materialien stellt sich inzwischen als ein in gleicher Weise wachsendes Problem heraus Recyclingsysteme entwickeln sich nur mühsam, haben eine fragliche Effektivität und sind oft nur regional, z. B. in Deutschland umgesetzt. Hinzu kommt, daß das Erdöl als das natürliche Ausgangsmaterial der thermoplastischen polyolefinischen Kunststoffe begrenzt ist. Diese Umstände führen zu der grundsätzlichen Forderung nach geeigneten Verpackungsmaterialien aus nachwachsenden Rohstoffen, die zusätzlich umweltfreundlich entsorgt werden können.

Dieses Bedürfnis hat zur Entwicklung von Polymeren geführt, deren Herstellkette mit nachwachsende Rohstoffen beginnt. Beispiele hierfür sind Polymere und Copolymere von Milchsäuren und anderen Hydroxycarbonsäuren, im folgenden als PLA bezeichnet. Diese werden bei einer bestimmten Luftfeuchtigkeit und erhöhter Temperatur langsam hydrolysiert und letztlich zu Wasser und CO₂ zersetzt. Diese Polymere sind daher als abbaubare Polymere bekannt und können aus pflanzlichen, nachwachsenden Rohstoffen hergestellt werden. Die Herstellung von PLA erfolgt großtechnisch über die Ringöffnungspolymerisation eines cyclischen Milchsäuredimers, welches Lactid genannt wird. Entsprechende Verfahren sind im Stand der Technik bekannt und beispielsweise in US-A-1,995,970 oder US-A-2,362,511 beschrieben.

Neben den Rohstoffen an sich sind im Stand der Technik auch Folienprodukte aus PLA bekannt. US 5,443,780 beschreibt beispielsweise die Herstellung von orientierten Folien aus PLA. Das Verfahren geht aus von einer PLA-Schmelze, welche extrudiert und schnell abgekühlt wird. Anschließend kann diese Vorfolie einem uniaxialen Streckprozeß unterworfen oder sequentiell oder simultan biaxial verstreckt werden. Die Strecktemperatur liegt zwischen der Glastemperatur und der Kristallisationstemperatur des PLA. Durch die Verstreckung wird eine gesteigerte Festigkeit und ein höherer Young'scher Modul bei der Endfolie erzielt. Gegebenenfalls erfolgt nach der Verstreckung eine Thermofixierung.

Im Stand der Technik ist weiterhin bekannt, daß nicht orientierte Materialien aus thermoplastischen Polymeren durch sogenanntes Tiefziehen zu Formkörpern verarbeitet werden können. Auch die Verwendung von nicht orientierten PLA Folien zum Tiefziehen ist bekannt. Beispielsweise beschreibt Schlicht in Kunststoffe 88, (1998) 6, pp 888-890 das Tiefziehen von dickem PLA-Cast-Film für die Herstellung von Joghurtbechern Um die erforderliche Eigenfestigkeit des Bechers zu erreichen, wird dabei von einer dicken Folie ausgegangen. Die so hergestellten Formteile weisen meist eine Wanddicke von mehreren 100 µm auf. Auf diese Weise erhält man einen vollständig kompostierbaren Joghurtbecher, der umweltfreundlich und rückstandfrei entsorgt werden kann.

DE 69224772T2 beschreibt die Herstellung von Laminaten aus PLA und Leder, Papier, Cellulose, Stoff etc. Als Kleber werden vorzugsweise abbaubare Kleber wie z. B. Leim, Gelatine, Casein und Stärke vorgeschlagen. Ebenfalls wird ein Auftragen einer organischen Titanverbindung, organischen Silanverbindung oder Polyethylenimin als Haftschicht als vorteilhaft beschrieben.

EP-A-0514137 beschreibt die Herstellung eines Laminates, aus einer Schicht auf Basis von Polymilchsäure und einer Schicht regenerierter Cellulose, Papier, Leder, Tuch oder Fasern. In beiden Fällen werden die flächigen Verbunde anschließend zu Formkörpern weiterverarbeitet.

DE69317474T2 beschreibt die Herstellung eines Verbundmaterials, mit verbesserter Gasbarriere. Diese Gasbarriere wird durch die Beschichtung einer PLA Folie mit Aluminium erzielt.

Eine weitere Entwicklung auf dem Gebiet umweltfreundlicher Verpackungsmaterialien beschäftigt sich mit dem Ersatz von Polystyrolbehältern und -schalen durch entsprechende Formkörper auf Stärkebasis oder anderen abbaubaren Polymeren. Ein wesentlicher Nachteil dieser Formkörper auf Stärkebasis ist die mangelhafte Stabilität gegenüber wässrigen oder feuchten Füllgütern. Die Stärke nimmt die Feuchtigkeit auf, durchweicht und verliert jede mechanische Stabilität. Für solche Anwendungen sind Formkörper aus Stärke nicht verwendbar. Es besteht zwar grundsätzlich die Möglichkeit diese Stärkeformkörper durch entsprechende Beschichtungen hinreichend wasserabweisend zu machen. Diese Beschichtungen sind jedoch ihrerseits meist weder aus nachwachsenden Rohstoff noch biologisch abbaubar, so daß die Umweltverträglichkeit des gesamten Verbundes nicht mehr zweifelsfrei gegeben ist.

In der DE 101 11 686.1 ist beschrieben, daß biaxial orientierte Folien aus Polymilchsäure (PLA) tiefziehbar sind. Auf Grund dieser Eigenschaft kann PLA Folie zur Herstellung verschiedenster tiefgezogener Verpackungen eingesetzt werden. Die Tiefziehbarkeit dieser PLA-Folie ist noch verbesserungsbedürftig.

Weitere biologisch abbaubare Folien und ihre Herstellungsverfahren sind offenbart in WO 92/04412, DE 198 30 389 A1, US 5,849,374, US 6,153,276 und WO 00/05068.

Die Aufgabe der vorliegenden Erfindung bestand darin, eine Folie zur Verfügung zu stellen, welche in Formgebungsverfahren, wie z.B. Tiefziehen, vorteilhaft eingesetzt werden kann. Insbesondere soll die Folie innerhalb eines breiten Temperaturbereiches sehr gut tiefziehbar sein. Es ist zusätzlich wünschenswert, eine möglichst geringe Materialmenge für die Tiefzieh-Verpackung einzusetzen. Damit soll ein Verfahren zur Herstellung einer umweltfreundlichen Verpackung geschaffen werden, beim welchem zusätzlich nachwachsende Rohstoffe eingesetzt werden sollen. Vorteilhafterweise soll die Verpackung umweltfreundlich entsorgt werden können, vorzugsweise unter geeigneten Bedingungen kompostiert werden können.

Diese Aufgabe wird durch ein Verfahren zum plastischen Verformen einer biaxial verstreckten Folie gelöst, welche mindestens eine Basisschicht umfaßt, welche mindestens ein Polymeres I aus mindestens einer Hydroxycarbonsäure und ≥ 0,2 Gew.%, bezogen auf das Gewicht der Schicht, eines von dem Polymeren I verschiedenen thermoplastischen Polymeren II enthält, und wobei diese Folie durch Einwirken von pneumatischen und/oder mechanischen Kräften plastisch geformt wird und wobei das thermoplastische Polymere II ein Polypropylen oder ein Polyethylen ist und die Folie vor der Formung eine Dicke von 5 bis 80µm aufweist.

Des weiteren wird diese Aufgabe gelöst, durch die Bereitstellung von derart hergestellten Verpackungen bzw. Blisterverpackungen.

Weitere bevorzugte Ausführungsformen der Erfindung sind in den abhängigen Ansprüchen angegeben.

Die nach Anspruch 1 hergestellte, biaxial orientierte Folie umfaßt mindestens eine Basisschicht, welche mindestens ein Polymeres I aus mindestens einer Hydroxycarbonsäure und ≥ 0,2 Gew.-%, bezogen auf das Gewicht der Schicht, eines von dem Polymeren I verschiedenen thermoplastischen Polymeren II enthält. Vorzugsweise enthält die Basisschicht 0,5 bis 15 Gew.% des Polymeren II, insbesondere 1,0 bis 10 Gew.-% jeweils bezogen auf die Basisschicht. Im Hinblick auf die Kompostierbarkeit der Verpackung ist es vorteilhaft, den Gehalt an Polymer II möglichst gering zu halten Für solche kompostierbaren Ausführungsformen sollte die Menge an Polymer II 0,2 bis 5 Gew.-%, vorzugsweise 0,2 bis 3 Gew.-%, bezogen auf die Basisschicht, betragen.

Es wurde gefunden, daß der Zusatz der nachstehend näher beschriebenen thermoplastischen Polymeren II in der Basisschicht die Tiefziehbarkeit der biaxial verstreckten Folie aus Polyhydroxycarbonsäure deutlich verbessert. Außerdem wurde gefunden, daß Folien aus derartigen Mischungen in der Basisschicht in einem sehr breiten Temperaturbereich geformt, insbesondere tiefgezogen, werden können. Überraschenderweise sind sowohl Formverfahren bei erhöhten Temperaturen als auch Formverfahren bei einer Temperatur von 15 bis <40°C, vorzugsweise 20 bis 30°C, möglich. Zusätzlich wurde gefunden, daß die erfindungsgemäßen biaxial verstreckten Folien noch mit einer sehr geringen Dicke in den Formverfahren eingesetzt werden können, wenn der Basisschicht aus Polyhydroxycarbonsäure ein thermoplastisches Polymer II zugesetzt wird.

Im Rahmen der vorliegenden Erfindung wird unter der Basisschicht der Folie, diejenige Schicht verstanden, welche mindestens ein Polymeres I aus mindestens einer Hydroxycarbonsäure und ≥ 0,2 Gew.-%, bezogen auf das Gewicht der Schicht, eines von dem Polymeren I verschiedenen thermoplastischen Polymeren II enthält und welche die größte Schichtdicke aufweist und mindestens 40% der Gesamtfoliendicke ausmacht. Bei einschichtigen Ausführungsformen besteht die Folie nur aus dieser Basisschicht. Bei mehrschichtigen Ausführungsformen weist die Folie zusätzliche auf dieser Basisschicht aufgebrachte Deckschichten und gegebenenfalls zusätzlich Zwischenschichten auf.

Der Begriff "Folie" bedeutet im Sinne der vorliegenden Erfindung eine einschichtige Folie welche nur aus dieser Basisschicht besteht als auch mehrschichtige Folien, welche die Basisschicht und zusätzliche Schichten umfassen.

Im Rahmen der vorliegenden Erfindung werden Polymere I aus mindestens einer Hydroxycarbonsäuren "PHC" (Polyhydroxycarbonsäuren) genannt. Hierunter sind Homopolymere oder Mischpolymerisate zu verstehen, welche aus polymerisierten Einheiten von Hydroxycarbonsäuren aufgebaut sind. Unter den für die vorliegende Erfindung geeigneten PHC sind insbesondere Polymilchsäuren geeignet. Diese werden nachstehend als PLA (Polylactidacid) bezeichnet. Auch hier sind unter dem Begriff sowohl Homopolymere, welche nur aus Milchsäureeinheiten aufgebaut sind, als auch Mischpolymerisate zu verstehen, welche überwiegend Milchsäureeinheiten (>50%) in Verbindungen mit anderen Comonomeren, insbesondere anderen Hydroxymilchsäureeinheiten enthalten.

Die biaxial verstreckte, plastisch geformte Folie wird durch ein Verfahren hergestellt, bei welchem die biaxial verstreckte Folie unter Einwirkung von pneumatischen Kräften oder durch mechanische Einwirkung von Formwerkzeugen oder durch eine Kombination von pneumatischen und mechanischen Kräften plastisch geformt wird. Diese Formung wird vorzugsweise bei erhöhter Temperatur durchgeführt. Es ist jedoch durch den Zusatz von mindestens 0,2 Gew.-% Polymer II überraschenderweise auch möglich diese Formung bei Raumtemperatur durchzuführen.

Die plastische Formung mittels pneumatischer Kräfte kann durch Unterdruck (Tiefziehen) oder Überdruck, d.h. Druckluft erfolgen. Derartige Verfahren sind im Stand der Technik bekannt und werden im englischen Sprachgebrauch als "thermoforming" bezeichnet. Die Verfahren und ihre Ausgestaltung im Einzelnen sind beispielsweise beschrieben in Rosato's Plastics Encyclopedia and Dictionary, Seite 755 bis 766, auf welche hiermit ausdrücklich Bezug genommen wird. Die erfindungsgemäßen Verfahren zur Formung der biaxial verstreckten Folien mit modifizierter Basisschicht können nach den dort für unverstreckte Materialien beschriebenen Prinzipien und Ausgestaltungen erfolgen. Derartige Verfahren zur plastischen Formung der biaxial verstreckten Folie unter Einwirkung pneumatischer und/oder mechanischer Kräfte werden im Sinne der vorliegenden Erfindung zusammengefaßt als Formung oder plastische Formung bezeichnet.

Die plastische Formung der Folie unter Einwirkung pneumatischer Kräfte erfolgt beispielsweise mittels Unterdruck und wird dann auch als Tiefziehen bezeichnet. Beim Tiefziehen der erfindungsgemäßen biaxial orientierten Folie wird die vorgefertigte, biaxial verstreckte Folie über einen geeigneten Formkörper gelegt, der damit luftdicht abgeschlossen wird. An den Formkörper wird in geeignetere Weise ein Unterdruck oder Vakuum angelegt. Aufgrund der Druckdifferenz zwischen der Unterdruckkammer und der Umgebung wirkt auf die als Dichtung fungierende Folie ein Sog.

Durch Erwärmen der Folie mit Hilfe eines Heizelementes kann die Verformbarkeit der Folie erhöht werden. Das Heizelement ist dann über der Folienoberfläche angebracht und sorgt so für die Erwärmung der Folie vor oder während des Formgebungsschritts. Die Folie verformt sich unter der Einwirkung des Unterdrucks, gegebenenfalls bei gleichzeitiger Einwirkung der erhöhten Temperatur, in Richtung des Formkörpers. Temperatur, Unterdruck sowie die Reihenfolge der Einwirkung werden bei dem Prozeß so gewählt, daß sich die Folie an den Formkörper formschlüssig anlegt. Nach Beseitigen der Druckdifferenz und gegebenenfalls Abkühlung behält die Folie ihre Form, sie wurde plastisch geformt.

Verschiedene Ausführungen der Tiefziehverfahren sind beispielhaft in Fig. 1 dargestellt und zeigen schematisch Vorrichtungen zum Tiefziehen der biaxial verstreckten Folie. Weitere Verfahren zum Formen sind in den Figuren 2 und 3 dargestellt.

Bei den erfindungsgemäßen Verfahren zur plastischen Formung der erfindungsgemäßen biaxial orientierten Folie können grundsätzlich beliebige geeignete evakuuierbare Formen und gegebenenfalls Formwerkzeuge eingesetzt werden. In einer besonders vorteilhaften Ausführungsform der Erfindung wird als Form ein geformter Träger aus einem porösen Material oder ein mit Belüftungvorrichtungen versehener Träger verwendet, welcher im Verbund mit der plastisch geformten Folie, seinerseits als Behältnis, z. B. als Schale oder Becher, für das Packgut eingesetzt werden kann. Vorzugsweise ist das Material des porösen oder mit Belüftungsvorrichtung versehenen geformten Trägers, der als Form eingesetzt wird, aus einem nachwachsenden Rohstoff und wie die Folie abbaubar. Poröse geformte Träger, die als Behältnisse verwendet werden, sind beispielsweise aus Stärke, auf Zellulose basierend, z.B. aus Papier oder Pappe oder aus Materialien wie Torf, Kork etc., worunter Stärke bevorzugt ist.

Für Formungsverfahren bei erhöhter Temperatur wird die erfindungsgemäße biaxial verstreckte Folie auf eine Temperatur von 40 bis 150°C, vorzugsweise 60 bis 130°C, insbesondere 80 bis 120°C erwärmt. Diese Erwärmung erfolgt im einfachsten Fall mittels einer Heizvorrichtungen, die in räumlicher Nähe der Folie, meist darüber, angebracht ist. Geeignete Heizvorrichtungen sind beispielsweise Infrarotstrahler oder Heißluftgebläse.

Überraschenderweise wurde gefunden, daß die Formbarkeit der Folie durch den Zusatz von thermoplastischen Polymeren wie Polyolefinen, vorzugsweise Propylenpolymeren oder Polyethylenen, oder Polyestern verbessert werden kann. Insbesondere kann die erfindungsgemäße biaxial verstreckte Folie nach der Verstreckung durch pneumatische und/oder mechanische Kräfte innerhalb eines großen Temperaturbereichs plastisch geformt werden. Darüber hinaus ist auch der Einsatz von besonders dünnen biaxial verstreckten Folien in den Formverfahren möglich. Dies ist mit herkömmlichen biaxial orientierten Folien aus thermoplastischen Kunststoffen nicht möglich. Die mechanischen Festigkeiten der herkömmlichen biaxial verstreckten Folien sind auf Grund der Orientierung so hoch, daß es bei der Einwirkung von Unterdruck oder Überdruck oder beim mechanischen Formen solcher Folien zu Rissen oder Lochbildung kommt oder die Verformung nicht hinreichend ist.

Die plastisch geformte Folie kann auf verschiedene Weisen zur Herstellung einer Verpackung eingesetzt werden. Beispielsweise kann die plastisch geformte Folie als Abdeckfolie auf entsprechend geformte Träger in Form von Schalen oder Behälter aufgebracht werden, welche ihrerseits einen zusätzlichen Schutz beispielsweise gegen Feuchtigkeit benötigen. Hierbei ist insbesondere eine Kombination aus einer plastisch geformten Folie und einem porösen Formkörper, beispielsweise aus Stärke, aus Cellulosematerial, Kork, etc. bevorzugt. Die Beschichtung oder Laminierung der geformten Träger mit der plastisch geformten Folie kann auf geeignete Weise erfolgen. Beispielsweise kann eine partielle Verklebung der plastisch geformten Folie mit dem geformten Träger ausreichen. Für andere Fälle wird eine vollflächige Verklebung erwünscht sein.

In einer weiteren Ausführungsform kann der Laminiervorgang der Folie gegen den geformten Träger in einem Arbeitsschritt mit dem Formen der biaxial orientierten Folie, beispielsweise durch Tiefziehen, Blasformen und/oder der mechanischen Verformung, erfolgen. Hierbei kann sowohl eine einschichtige als auch eine mehrschichtige biaxial orientierte Folie eingesetzt werden. Die Oberfläche der Folie wird beim Formen gegen den Formkörper gesiegelt oder verklebt. Überraschenderweise wurde für einschichtige Folien gefunden, daß die Zusätze aus thermoplastischem Polymer II die Siegelung der Folie gegen den Formkörper nicht beeinträchtigt.

Geeignet sind auch Ausführungsformen der Folie, welche eine Deckschicht aufweisen. Die mehrschichtige Folie wird beim Formen so über den Formkörper positioniert, daß die ggf. klebfähige oder siegelfähige Oberflächenschicht dem Formkörper zugewandt ist. Beim Formen führen eine eventuelle Temperaturerhöhung in Verbindung mit Überdruck oder Unterdruck und/oder der mechanischen Krafteinwirkung durch das Formwerkzeug zu einer Haftung zwischen der Oberfläche des geformten Trägers und der Oberfläche der Folie, während sich die Folie beim Formgebungsprozeß formschlüssig an den als Form dienenden geformten Träger anlegt. Im allgemeinen wird es für diese Verfahrensvariante bevorzugt sein die Formung bei einer erhöhte Temperatur durchzuführen, um die Haftung zu verbessern. Gegebenenfalls wird der geformte Träger beim Formen Folie ebenfalls erwärmt, um so den Siegel- oder Laminiervorgang, d.h. die Ausbildung der Haftung zwischen der Folienoberfläche und dem geformten Träger zu unterstützen. Beschichtete Folien mit Klebern oder Kaltsiegelmassen auf der Oberfläche können auch durch Kaltverformungen bei Raumtemperatur (15 bis < 40°C) gleichzeitig mit dem Träger verklebt werden.

Eine geeignet beschichtete Folie für diese Ausführungsform der Erfindung wird entweder durch Coextrusion hergestellt, gegebenenfalls ist auch eine In-Line oder eine Off-line Beschichtung der biaxial verstreckten Folie möglich. Als Beschichtungsmaterialien kommen übliche Kleber oder Kaltsiegelbeschichtungen in Frage, welche im allgemeinen durch eine off-line Beschichtung aufgetragen werden. Vorteilhaft sind auch coextrudierte Schichten aus PLA,-Copolymeren oder Mischungen von siegelfähigen olefinischen Polymeren, z.B. HDPE, Propylen-copolymere, mit PLA. In einer weiteren vorteilhaften Ausformung besteht die Folie nur aus der Basisschicht, in welche während des Extrusionsvorganges zusätzlich zum thermoplastischen Polymeren II eine klebefähige Komponente eingearbeitet wird.

Als geformte Träger in diesen kombinierten Verfahren sind die vorstehend beschriebenen Materialien wie Stärke, Papier, Pappe etc. für den Träger gleichermaßen geeignet und vorteilhaft, da ebenfalls aus nachwachsenden Rohstoffen und abbaubar. Ebenso sind Materialien mit geringerer Porosität geeignet, in welche Belüftungsvorrichtungen eingebracht werden. Als Materialien kommen z.B. Holz, Metalle oder Keramiken in Frage. Grundsätzlich sollte der gleichzeitig als Form eingesetzte Träger eine derartige räumliche dreidimensionale Gestalt aufweisen, daß er zur Aufnahme von Packgut geeignet ist. Dabei kommen beliebige räumliche Gestaltungen in Frage, wie beispielsweise, Schalen, Becher, Tabletts, Abformteile oder andere behälterartige Formen.

In einer weiteren Verwendung kann die plastisch geformte Folie zur Herstellung einer sogenannten Blisterverpackung verwendet werden. Hierbei wird die plastisch geformte Folie mit einem Packgut befüllt und mit einem flächigen Träger verschlossen. Dabei wird die Folie gegen den Träger partiell gesiegelt oder verklebt. Als Rohstoffe für den Träger werden vorzugsweise kompostierbare Materialien aus nachwachsenden Rohstoffen eingesetzt, beispielsweise Stärke, Materialien auf Cellulosebasis, kompostierbare Folien geeigneter Dicke.

Für die verschiedenen Form-Verfahren zur Herstellung der plastisch geformten Folie können grundsätzlich sowohl einschichtige als auch mehrschichtige biaxial orientierte Folien eingesetzt werden. Mehrschichtige Folien sind in der Regel aus der Basisschicht und mindestens einer Deckschicht aufgebaut. Für die Deckschichten können grundsätzlich ebenfalls die für die Basisschicht beschriebenen Mischungen aus Polymer I und II verwendet werden. Grundsätzlich können auch Deckschichten aufgebracht werden welche nur aus PHC aufgebaut sind. Gegebenenfalls ist es auch möglich modifizierte PLA Rohstoffe in der Deckschicht einzusetzen. Die Deckschicht/en ist/sind entweder auf der Oberfläche der Basisschicht oder auf der Oberfläche einer gegebenenfalls zusätzlich vorhandenen Zwischenschicht aufgebracht.

Die Basisschicht der Folie enthält im allgemeinen mindestens 80 bis 99,8 Gew.-%, vorzugsweise 85 bis 99,5 Gew.-%, insbesondere 90 bis <99,5Gew.-%, jeweils bezogen auf die Schicht, eines Polymeren auf Basis einer Hydroxycarbonsäure und 0,2 bis 15 Gew.-%, vorzugsweise 0,5 bis 10 Gew.-%, insbesondere 0,5 bis 5 Gew.-% eines thermoplastischen Polymeren II, sowie gegebenenfalls zusätzlich übliche Additive in jeweils wirksamen Mengen.

Als Monomere der Polymeren auf Basis von Hydroxycarbonsäuren sind insbesondere Mono-, Di- oder Trihydroxycarbonsäuren, bzw. deren dimere cyclische Ester geeignet, worunter Milchsäure in ihrer D- oder L-Form bevorzugt ist. Ein besonders geeignetes PLA ist Polymilchsäure der Fa. Cargill Dow (NatureWorks®). Die Herstellung dieser Polymilchsäure ist im Stand der Technik bekannt und erfolgt über katalytische Ringöffnungspolymerisation von Lactid (1,4-Dioxan-3,6-dimethyl2,5-dion), dem dimeren cyclischen Ester der Milchsäure, daher wird PLA häufig auch als Polylactid bezeichnet. In den folgenden Veröffentlichungen ist die Herstellung von PLA beschrieben US 5,208,297, US 5,247,058 oder US 5,357,035.

Bevorzugt sind Polymilchsäuren, welche ausschließlich aus Milchsäureeinheiten aufgebaut sind. Hierbei sind insbesondere PLA Homopolymere bevorzugt, welche 80-100 Gew.-% L-Milchsäureeinheiten, entsprechend 0 bis 20 Gew.-% D-Milchsäureeinheiten, enthalten. Zur Verringerung der Kristallinität können auch noch höhere Konzentrationen D-Milchsäureeinheiten enthalten sein. Gegebenenfalls kann die Polymilchsäure zusätzliche von der Milchsäure verschiedene Mono- oder Polyhydroxysäureeinheiten als Comonomer aufweisen, beispielsweise Glycolsäureeinheiten, 3-Hydroxypropansäureeinhaiten, 2,2-Dimethyl-3-hydroxypropansäureeinheiten oder höhere Homologe von Hydroxycarbonsäuren mit bis zu 5 Kohlenstoffatomen.

Bevorzugt sind Milchsäurepolymere mit einem Schmelzpunkt von 110 bis 170°C, vorzugsweise von 125 bis 165°C, und einen Schmelzflußindex (Messung DIN 53 735 bei 2,16 N Belastung und 190°C) von 1 bis 50g/10 min, vorzugsweise von 1 bis 30 g/10 min. Das Molekulargewicht des PLA liegt in einem Bereich von mindestens 10.000 bis 500.000 (Zahlenmittel), vorzugsweise 50.000 bis 300.000 (Zahlenmittel). Die Glasübergangstemperaur Tg liegt vorzugsweise in einem Bereich von 40 bis 100°C, vorzugsweise 40 bis 80°C.

Die thermoplastischen Polymeren II, welche der Basisschicht zugesetzt werden, verbessern die Tiefziehbarkeit der Folie gegenüber solchen Folien, welche eine Basisschicht aus PLA ohne diese thermoplastischen Polymeren aufweisen. Diese vorteilhafte Wirkung wurde insbesondere bei Mischungen aus PHC, vorzugsweise PLA und Polypropylenen, Mischungen aus PHC, vorzugsweise PLA, und Polyethylenen sowie Mischungen aus PHC, vorzugsweise PLA, und Polyestern gefunden.

Für die Mischungen geeignete Polypropylene sind Polymerisate, welche mindestens 50 Gew.-% Propyleneinheiten enthalten. Beispiele für geeignete Propylenpolymere als thermoplastisches Polymer II sind Propylenhomopolymere, Copolymere von Ethylen und Propylen oder Propylen und Butylen-1 oder Terpolymere von Ethylen und Propylen und Butylen-1 oder eine Mischung oder ein Blend aus zwei oder mehreren der genannten Homo-, Co- und Terpolymeren.
Insbesondere geeignet sind
statistische Ethylen-Propylen-Copolymere mit einem Ethylengehalt von 1 bis 20 Gew.-%, bevorzugt 2,5 bis 10 Gew.-%, oder statistische Propylen-Butylen-1-Copolymere mit einem Butylengehalt von 2 bis 25 Gew.-%, bevorzugt 4 bis 20 Gew.-%, jeweils bezogen auf das Gesamtgewicht des Copolymeren, oder
statistische Ethylen-Propylen-Butylen-1-Terpolymere mit einem Ethylengehalt von 1 bis 20 Gew.-%, bevorzugt 2 bis 6 Gew.-%, und einem Butylen-1-Gehalt von 2 bis 20 Gew.-%, bevorzugt 4 bis 20 Gew.-%, jeweils bezogen auf das Gesamtgewicht des Terpolymeren, oder
ein Blend oder eine Mischung aus einem Ethylen-Propylen-Butylen-1-Terpolymeren und einem Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%, jeweils bezogen auf das Gesamtgewicht des Blend oder der Mischung.

Die geeigneten vorstehend beschriebenen Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 100 bis 140 °C. Das vorstehend beschriebene Blend aus Co- und Terpolymeren hat einen Schmelzflußindex von 5 bis 9 g/10 min und einen Schmelzpunkt von 100 bis 150 °C. Alle vorstehend angegebenen Schmelzflußindices werden bei 230 °C und einer Kraft von 21,6 N (DIN 53 735) gemessen.

Die geeigneten Propylenhomopolymeren weisen im allgemeinen einen Schmelzflußindex von 1,5 bis 30 g/10 min, vorzugsweise von 3 bis 15 g/10 min, auf. Der Schmelzpunkt der Homopolymeren liegt im Bereich von 150 bis 170°C, vorzugsweise 155 bis 165°C. Bevorzugt sind isotaktische Homopolymere deren Isotaktizität größer 92% ist, vorzugsweise im Bereich von 94 bis 98% liegt. Der n-heptan lösliche Anteil der isotaktischen Propylenhomopolymeren beträgt weniger als 10 Gew.-%, vorzugsweise 1 bis 8 Gew.-% bezogen auf das Gewicht des Homopolymeren. Alle vorstehend angegebenen Schmelzflußindices werden bei 230 °C und einer Kraft von 21,6 N (DIN 53 735) gemessen.

Für die Mischung geeignete Polyethylene umfassen grundsätzlich alle Homo- oder Copolymerisate, welche überwiegend, d.h. mindestens 50 Gew.-%, vorzugsweise 80 bis 100 Gew.-% Ethyleneinheiten enthalten, beispielsweise LDPE, MDPE und HDPE. Beispielsweise können Polyethylene mit einer Dichte im Bereich 0,88 bis 0,93 und einem Kristallitschmelzpunkt im Bereich von 100 bis 120 °C eingesetzt werden. Der Schmelzflußindex beträgt bevorzugt 0,1 bis 10 g/10min (190/2,16). Derartige Polyethylene niedriger Dichte sind als LDPE, LLDPE oder VLPE im Stand der Technik an sich bekannt. Diese Polyethylene niedriger Dichte weisen Molekülverzweigungen mit unterschiedlich langen Seitenketten auf und werden daher auch als verzweigte Polyethylene bezeichnet.

Polyethylene hoher und mittlerer Dichte sind als Polymer II ebenfalls geeignet. Hierbei kommen ebenfalls Ethylenhomopolymerisate und Ethylencopolymerisate in Frage. Diese Polymeren haben in der Regel wenige und kurze Seitenketten und entsprechend höhere Kristallinitäten. Der Kristallisationsgrad liegt im Bereich von 50 bis 90%. Die Dichte beträgt für MDPE >0,93 bis 0,945 g/cm3, der Schmelzflußindex (190/2,16) 0,1 bis 1 g/10min, der Kristallitschmelzpunkt 110 bis 130°C. Für HDPE beträgt die Dichte >0,945 bis 0,96 g/cm3, der Schmelzflußindex (190/2,16) 0,1 bis 1 g/10min, und der Kristallitschmelzpunkt 130 bis 150°C.

Als Comonomere in Polyethylenen werden im allgemeinen olefinische Monomere eingesetzt, worunter kurzkettige Olefine mit 3 bis 6 C-Atomen, insbesondere Propylen und/oder Butylen bevorzugt sind.

Die vorstehend genannten Polyethylene sind an sich im Stand der Technik bekannt und sind bereits als Komponenten in biaxial orientierten Polypropylenfolien beschrieben. Für die Zwecke der vorliegenden Erfindung sind HDPE besonders bevorzugt.

Geeignete thermoplastische Polyester sind die an sich bekannten aromatischen Polyester aus aromatischen Dicarbonsäuren und mehrwertigen Alkoholen. Aromatische Dicarbonsäuren sind beispielsweise Terephtalsäure, Benzoldicarbonsäure, Naphtalin-2,6-dicarbonsäure oder Isophtalsäure, mehrwertige Alkoholen sind z.B. Diethylenglykol, Triethylenglykol, Ethandiol oder Butandiole. Besonders bevorzugt sind Polyester aus Ethylenglykol oder Butylenglykol und Terephtalsäure, welche auch als PET oder PBT bezeichnet werden.

Darüber hinaus können vorteilhaft an sich bekannte Copolyester eingesetzt werden, welche auch als PET G bekannt sind und auf Basis drei verschiedener Monomere basieren, im allgemeinen mindestens zwei verschiedene mehrwertigen Alkohole und eine Dicarbonsäure. Derartige Copolyester, welche für die Zwecke der vorliegenden Erfindung besonders geeignet sind, sind in der EP 0 418 836, Seite 2 Zeilen 42 bis Seite 3, Zeile 1 beschrieben. Auf diese Beschreibung wird hiermit ausdrücklich Bezug genommen.

Besonders vorteilhaft werden als thermoplastisches Polymer II solche Polypropylene, Polyethylene oder Polyester ausgewählt, welche bekannterweise zur Herstellung von oder in biaxial orientierten Folie aus den genannten Polymeren eingesetzt werden.

Zusätzlich zu den genannten Polymeren I und II kann die Basisschicht übliche Additive wie Neutralisationsmittel, Stabilisatoren, Antistatika, und/oder Gleitmittel in jeweils wirksamen Mengen enthalten.

Die Folie umfaßt gegebenenfalls eine oder beidseitig Deckschicht/en aus Polyhydroxycarbonsäuren, welche auf der Basisschicht oder auf zusätzlichen Zwischenschichten, aufgebracht ist/sind. Die Deckschicht/en enthält/enthalten im allgemeinen 85 bis 100 Gew.-% Polyhydroxysäuren, vorzugsweise 90 bis <100Gew.-% Polyhydroxysäuren und 0 bis 15 Gew.%. bzw. >0 bis 10 Gew.-%, üblicher Additive., jeweils bezogen auf das Gewicht der Deckschicht/en.

Beispiele für geeignete Polyhydroxysäuren der Deckschicht/en sind Poylmilchsäuren, welche ausschließlich aus Milchsäureeinheiten aufgebaut sind. Hierbei sind insbesondere PLA-Polymere bevorzugt, welche 80-100 Gew.-% L-Milchsäureeinheiten, entsprechend 0 bis 20 Gew.-% D-Milchsäureeinheiten, enthalten. Zur Verringerung der Kristallinität können auch noch höhere Konzentrationen D-Milchsäureeinheiten als Comonomer enthalten sein. Gegebenenfalls kann die Polymilchsäure zusätzliche von der Milchsäure verschiedene Polyhydroxysäureeinheiten als Comonomer wie für die Basisschicht beschrieben aufweisen.

Für die Deckschicht/en sind Milchsäurepolymere mit einem Schmelzpunkt von 110 bis 170°C, vorzugsweise von 125 bis 165°C, und einen Schmelzflußindex (Messung DIN 53 735 bei 2,16 N Belastung und 190°C) von 1 bis 50 g/10 min, vorzugsweise von 1 bis 30 g/10 min bevorzugt. Das Molekulargewicht des PLA liegt in einem Bereich von mindestens 10.000 bis 500.000 (Zahlenmittel), vorzugsweise 50.000 bis 300.000 (Zahlenmittel). Die Glasübergangstemperaur Tg liegt in einem Bereich von 40 bis 100°C, vorzugsweise 40 bis 80°C.

In einer weiteren Ausführungsform kann/können die Deckschicht/en auch aus den vorstehend für die Basisschicht beschriebenen Mischungen aus Polymeren I auf Basis von Hydroxycarbonsäure und thermoplastischen Polymeren II aufgebaut sein. Grundsätzlich sind alle vorstehend für die Basisschicht beschriebene Mischungen aus Polymer I und II auch für die Deckschicht geeignet.

Gegebenenfalls können der/den Deckschicht/en die vorstehend für die Basisschicht beschriebenen Additive wie Antistatika, Neutralisationsmittel, Gleitmittel und/oder Stabilisatoren, sowie gegebenenfalls zusätzlich Antiblockmittel zugesetzt werden.

Die Dicke der Deckschicht/en ist größer als 0,1 µm und liegt vorzugsweise im Bereich von 0,1 bis 5µm, insbesondere 0,5 bis 3 µm, wobei beidseitige Deckschichten gleich oder verschieden dick sein können. Die Gesamtdicke der erfindungsgemäßen Folie kann variieren und beträgt vorzugsweise 5 bis 80 µm, insbesondere 8 bis 50 µm, wobei die Basisschicht bei mehrschichtigen Ausführungsformen etwa 40 bis 98 % der Gesamtfoliendicke ausmacht. Für besonders umweltfreundliche Verpackungen ist es bevorzugt besonders dünne Folien mit einer Dicke von 5 bis 20 µm, vorzugsweise 5 - 15µm einzusetzen. Überraschenderweise sind die Folie mit dieser Dicke noch mittels Tiefziehen und anderer Formungsprozeße formbar.

Die einschichtige oder mehrschichtige biaxial orientierte Folie wird nach dem an sich bekannten Stenter- oder Blasverfahren hergestellt werden.

Im Rahmen des Stenterverfahrens werden die den einzelnen Schichten der Folie entsprechenden Schmelzen durch eine Flachdüse extrudiert oder coextrudiert, die so erhaltene Folie zur Verfestigung auf einer oder mehreren Walze/n abgezogen, die Folie anschließend gestreckt (orientiert), die gestreckte Folie thermofixiert.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die weitere Beschreibung der Folienherstellung erfolgt am Beispiel einer Flachfolienextrusion mit anschließender sequentialer Streckung.

Hierbei wird wie beim Extrusionsverfahren üblich das Polymere bzw die Polymermischung der einzelnen Schichten in einem Extruder komprimiert und verflüssigt, wobei die gegebenenfalls zugesetzten Additive bereits im Polymer bzw. in der Polymermischung enthalten sein können. Es hat sich als besonders günstig erwiesen, die thermoplastischen Polymeren als Masterbatch in die Basisschicht einzuarbeiten. Dieses Masterbatch basiert auf PLA und enthält thermoplastisches Polymer wie PP, PE oder PET in einer Konzentration von 5 bis 40 Gew.-% bezogen auf das Batch. Gegebenenfalls können die Komponenten der Mischung in den entsprechenden Konzentrationen in einem separaten Granulierungschritt mittels Schmelzeextrusion vermischt werden. Es wurde gefunden, daß die Einarbeitung der thermoplastischen Polymeren I in eine PLA Matrix über diese Techniken besonders gleichmäßig erfolgt. Das Vermischen der reinen Komponenten im Folienextruder kann hingegen zu Stippen und optischen Fehlstellen in der Folie führen, welche vermutlich durch eine nicht hinreichende Vermischung der Polymeren I und II im Folien-Extruder entstehen. Diese Verfahrensvariante ist daher je nach Mischungskomponente möglich, aber nicht bevorzugt.

Die Schmelze/n werden dann durch eine Flachdüse (Breitschlitzdüse) gepreßt, und die ausgepreßte Folie wird auf einer oder mehreren Abzugswalzen bei einer Temperatur von 10 bis 100°C, vorzugsweise 20 bis 60°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 50 bis 150°C zweckmäßigerweise mit Hilfe zweier entsprechend dem angestrebten Streckverhältnis verschieden schnell laufender Walzen durchführen und das Querstrecken vorzugsweise bei einer Temperatur von 50 bis 150°C mit Hilfe eines entsprechenden Kluppenrahmens. Die Längsstreckverhältnisse liegen im Bereich von 1,5 bis 6 vorzugsweise 2 bis 5. Die Querstreckverhältnisse liegen im Bereich von 3 bis 10, vorzugsweise 4 bis 7. Es wurde gefunden, daß der Zusatz von thermoplastischem Polymer die Anwendung höhere Längs- und Querstreckverhältnisse im Vergleich zu einer PLA Folie ohne derartige Zusätze ermöglicht.

An die Streckung der Folie schließt sich ihre Thermofixierung (Wärmebehandlung) an, wobei die Folie etwa 0,1 bis 10 s lang bei einer Temperatur von 60 bis 150°C gehalten wird. Anschließend wird die Folie in üblicher Weise mit einer Aufwickeleinrichtung aufgewickelt.

Die Erfindung wird nachstehend an Hand von Ausführungsbeispielen erläutert

### Teil A. Herstellung der biaxial verstreckten PLA-Folie

### Beispiel 1:

Es wurde durch Extrusion und anschließende stufenweise Orientierung in Längs- und Querrichtung eine einschichtige Folie mit einer Dicke von 15 µm hergestellt. Die Schicht war zu ca. 99 % aus einer Polymilchsäure mit einem Schmelzpunkt von 135°C und einem Schmelzflußindex von ca. 3 g/10min und einer Glastemperatur von um 60 °C aufgebaut, zu ca. 1 % aus einem Propylenhomopolymeren (Handelsname Escorene PP4352F1) und enthielt Stabilisatoren und Neutralisationsmittel in üblichen Mengen. Die Herstellbedingungen in den einzelnen Verfahrensschritten waren:

| | | |
|---|---|---|
| Extrusion: | Temperaturen Basisschicht: | 195 °C |
| | Temperatur der Abzugswalze: | 50 °C |
| Längsstreckung: | Temperatur: | 68 °C |
| | Längsstreckverhältnis: | 2,5 |
| Querstreckung: | Temperatur: | 88 °C |
| | Querstreckverhältnis (effektiv): | 5,5 |
| Fixierung: | Temperatur: | 88 °C |
| | Konvergenz: | 5 % |

### Beispiel 2:

Es wurde durch Extrusion und anschließende stufenweise Orientierung in Längs- und Querrichtung wie in Beispiel 1 beschrieben eine einschichtige Folie mit einer Dicke von 15 µm hergestellt. Abweichend zu Beispiel 1 war die Schicht war zu ca. 99 % aus einer Polymilchsäure mit einem Schmelzpunkt von 135°C und einem Schmelzflußindex von ca. 3 g/10min und einer Glastemperatur von um 60 °C aufgebaut, zu ca. 1 % aus einem Polyethylen (Handelsname LDPE PG 7004, hergestellt von der Firma Dow) und enthielt Stabilisatoren und Neutralisationsmittel in üblichen Mengen.

### Beispiel 3 (Gehört nicht zum Gegenstand der vorliegenden Erfindung) :

Es wurde durch Extrusion und anschließende stufenweise Orientierung in Längs- und Querrichtung wie in Beispiel 1 beschrieben eine einschichtige Folie mit einer Dicke von 15 µm hergestellt. Abweichend zu Beispiel 1 war die Schicht war zu ca. 99 % aus einer Polymilchsäure mit einem Schmelzpunkt von 135°C und einem Schmelzflußindex von ca. 3 g/10min und einer Glastemperatur von um 60 °C aufgebaut, zu ca. 1 % aus einem Polyester (Eastar PETG6763, hergestellt von der Firma Eastman) und enthielt Stabilisatoren und Neutralisationsmittel in üblichen Mengen.

### Beispiel 4

Es wurde durch Coextrusion und anschließende stufenweise Orientierung in Längs- und Querrichtung eine dreischichtige Folie mit symmetrischem Aufbau mit einer Gesamtdicke von 20 µm hergestellt. Die Deckschichten hatten eine Dicke von jeweils 1,5 µm. Die Basisschicht war wie in Beispiel 1 beschrieben zu ca. 99 % aus einer Polymilchsäure mit einem Schmelzpunkt von 135°C und einem Schmelzflußindex von ca. 3 g/10min und einer Glastemperatur von um 60 °C aufgebaut, zu ca. 1 % aus einem Polypropylen (Handelsname Escorene PP4352F1) und enthielt Stabilisatoren und Neutralisationsmittel in üblichen Mengen. Die Deckschichten waren zu ca. 99 % aus einer Polymilchsäure mit einem Schmelzpunkt von 135°C und einem Schmelzflußindex von ca. 3 g/10min und einer Glastemperatur von um 60 °C aufgebaut, zu ca. 1 % aus einem Polypropylen (Handelsname Escorene PP4352F1) und enthielten Stabilisatoren und Neutralisationsmittel sowie Gleitmittel und Antistatika in üblichen Mengen.

Die Herstellbedingungen in den einzelnen Verfahrensschritten waren:

| | | |
|---|---|---|
| Extrusion: | Temperaturen Basisschicht: | 195 °C |
| | Deckschichten: | 175 °C |
| | Temperatur der Abzugswalze: | 50 °C |
| Längsstreckung: | Temperatur: | 68 °C |
| | Längsstreckverhältnis: | 3 |
| Querstreckung: | Temperatur: | 85 °C |
| | Querstreckverhältnis (effektiv): | 5,5 |
| Fixierung: | Temperatur: | 75 °C |
| | Konvergenz: | 5 % |

### Beispiel 5:

Es wurde durch Coextrusion und anschließende stufenweise Orientierung in Längs- und Querrichtung eine dreischichtige Folie mit symmetrischem Aufbau mit einer Gesamtdicke von 20 µm hergestellt. Die Deckschichten hatten eine Dicke von jeweils 1,5 µm. Die Basisschicht war zu ca. 99 % aus einer Polymilchsäure mit einem Schmelzpunkt von 135°C und einem Schmelzflußindex von ca. 3 g/10min und einer Glastemperatur von um 60 °C aufgebaut, zu ca. 0,5 % aus einem Polypropylen (Handelsname Escorene PP4352F1) und zu ca. 0,5 % aus einem Polyester (Handelsname Eastar PETG6763, hergestellt von der Firma Eastman) und enthielt Stabilisatoren und Neutralisationsmittel sowie Gleitmittel und Antistatika in üblichen Mengen.
Die Herstellbedingungen in den einzelnen Verfahrensschritten waren:

| | | |
|---|---|---|
| Extrusion: | Temperaturen Basisschicht: | 195 °C |
| | Deckschichten: | 175 °C |
| | Temperatur der Abzugswalze: | 50 °C |
| Längsstreckung: | Temperatur: | 68 °C |
| | Längsstreckverhältnis: | 3 |
| Querstreckung: | Temperatur: | 85 °C |
| | Querstreckverhältnis (effektiv): | 5,5 |
| Fixierung: | Temperatur: | 75 °C |
| | Konvergenz: | 5 % |

### Teil B: Plastische Formung der biaxial verstreckten Folien

### Beispiel 6:

Als Tiefziehwerkzeug dient ein poröser Formkörper aus Stärke, der keinen Verbund mit der Folie eingeht. Es wurden die gemäß den Beispielen 1 bis 5 hergestellten Folie verwendet. Als Tiefziehapparatur wurde ein handelsüblicher Tiefziehapparat (z. B. KFG37, hergestellt von der Fa. Illig) verwendet. Die Folie wird über den porösen Stärkeformkörper gespannt und luftdicht abgedichtet. Die Folie wird mit einer Heizrate von ca. 60 % für ca. 0,5 Sekunden erwärmt. Anschließend wird durch den porösen Formkörper Vakuum gezogen und ein Unterdruck von ca. 1 bar erzeugt unter Beibehaltung der Erwärmung. Nach ca. 4 Sekunden wird das Vakuum belüftet und die Heizung entfernt. Unter der Einwirkung des Unterdruckes und der Beheizung legt sich die Folie formschlüssig an den porösen Formkörper an. Nach Abkühlen verbleibt die Folie in dieser Form.

### Beispiel 7:

Als Tiefziehwerkzeug dient ein poröser Formkörper aus Stärke, der keinen Verbund mit der Folie eingeht. Es wurden die gemäß den Beispielen 1 bis 5 hergestellten Folie verwendet. Als Tiefziehapparatur wird ein handelsüblicher Tiefziehapparat (z. B. KFG37, hergestellt von der Fa. Illig) verwendet. Die Folie wird über den porösen Stärkeformkörper gespannt und luftdicht abgedichtet. Die Folie wird mit einer Heizrate von ca. 80 % für ca. 0,5 Sekunden erwärmt. Anschließend wird durch den porösen Formkörper Vakuum gezogen und ein Unterdruck von ca. 1 bar erzeugt unter Beibehaltung der Erwärmung. Nach ca. 2 Sekunden wird das Vakuum belüftet und die Heizung entfernt. Unter der Einwirkung des Unterdruckes und der Beheizung legt sich die Folie formschlüssig an den porösen Formkörper an. Nach Abkühlen verbleibt die Folie in dieser Form.

### Beispiel 8:

Als Tiefziehwerkzeug dient ein poröser Formkörper aus Stärke, der keinen Verbund mit der Folie eingeht. Es wurden die gemäß den Beispielen 1 bis 5 hergestellten Folie verwendet. Als Tiefziehapparatur wird ein handelsüblicher Tiefziehapparat (z. B. KFG37, hergestellt von der Fa. Illig) verwendet. Die Folie wird über den porösen Stärkeformkörper gespannt und luftdicht abgedichtet. Die Folie wird mit einer Heizrate von ca. 100 % für ca. 0,5 Sekunden erwärmt. Anschließend wird durch den porösen Formkörper Vakuum gezogen und ein Unterdruck von ca. 1 bar erzeugt unter Beibehaltung der Erwärmung. Anschließend wird das Vakuum belüftet und die Heizung entfernt. Unter der Einwirkung des Unterdruckes und der Beheizung legt sich die Folie formschlüssig an den porösen Formkörper an. Nach Abkühlen verbleibt die Folie in dieser Form.

## Patentansprüche

1. . Verfahren zum plastischen Verformen einer biaxial verstreckten Folie, **dadurch gekennzeichnet, daß** die biaxial verstreckte Folie mindestens eine Basisschicht umfaßt, welche mindestens ein Polymeres I aus mindestens einer Hydroxycarbonsäure und ≥ 0,2 Gew.-%, bezogen auf das Gewicht der Schicht, eines, von dem Polymeren I verschiedenen, thermoplastischen Polymeren 11 enthält und diese Folie durch Einwirken von pneumatischen Kräften und/oder durch mechanische Einwirkung von Formwerkzeugen plastisch geformt wird und wobei das thermoplastische Polymere II ein Polypropylen oder ein Polyethylen ist und die Folie vor der Formung eine Dicke von 5 bis 80µm aufweist.

2. . Verfahren nach Anspruch 1, **dadurch gekennzeichnet, daß** die biaxial orientierte Folie vor oder während der Formung auf eine Temperatur von 40 bis 150°C, vorzugsweise auf eine Temperatur von 60 bis 130°C erwärmt wird.

3. . Verfahren nach Anspruch 1, **dadurch gekennzeichnet, daß** die biaxial orientierte Folie bei einer Temperatur von 15 bis <40°C, geformt wird.

4. . Verfahren nach Anspruch 1, 2 oder 3, **dadurch gekennzeichnet, daß** das Polymere I eine Polymilchsäure ist.

5. . Verfahren nach Anspruch 4, **dadurch gekennzeichnet, daß** das Polymere I eine Polymilchsäure ist, welche 80 - 100 Gew.-% L-Milchsäureeinheiten und 0 bis 20 Gew.-%D-Milchsäureeinheiten oder andere Polyhydroxycarbonsäureeinheiten aufweist.

6. . Verfahren nach Anspruch 5, **dadurch gekennzeichnet, daß** das Propylenpolymer ein Propylenhomopolymer oder Propylencopolymer und das, Polyethylenpolymer ein HDPE, ein LDPE oder ein MDPE ist

7. . Verfahren nach Anspruch 1 bis 6, **dadurch gekennzeichnet, daß** die Basisschicht das Polymere I in einer Menge 85 bis 99,8 Gew.-%, vorzugsweise 90 bis 99 Gew.-% und das Polymere II in einer Menge von 0,5 bis 15 Gew.%, vorzugsweise 1 bis 10 Gew.-%, jeweils bezogen auf die Schicht, enthält.

8. . Verfahren nach Anspruch 1, 2 oder 4 bis 7, **dadurch gekennzeichnet, daß** die biaxial orientierte Folie mittels IR-Strahler und/oder Heißluft und/oder Heißdampf auf die erhöhte Temperatur erwärmt wird.

9. . Verfahren nach Anspruch 1 bis 8, **dadurch gekennzeichnet, daß** die pneumatischen Kräfte als Unterdruck oder Überdruck auf die biaxial orientierte Folie einwirken.

10. .Verfahren nach Anspruch 1 bis 9, **dadurch gekennzeichnet, daß** die Formung der biaxial orientierten Folie mittels Tiefziehen erfolgt

11. .Verfahren nach Anspruch 1 bis 10 **dadurch gekennzeichnet, daß** die biaxial orientierte Folie vor der Formung eine Dicke von 5 bis 20µm aufweist.

12. . Verfahren nach Anspruch 1 bis 11, **dadurch gekennzeichnet, daß** die sich die biaxial orientierte Folie unter Einwirkung der pneumatischen und/oder mechanischen Kräfte formschlüssig an die Form anlegt.

13. . Verfahren zur Herstellung einer Verpackung aus einem geformten Träger und einer biaxial verstreckten und plastisch geformten Folie, **dadurch gekennzeichnet, daß** die biaxial gestreckte Folie nach einem Verfahren gemäß einem der Ansprüchen 1 bis 12 plastisch geformt wurde und nach der Formung mittels Laminierung, Verklebung oder Siegelung auf einen formgleichen Träger aufgebracht wird.

14. .Verfahren nach Anspruch 13, **dadurch gekennzeichnet, daß** die Form, die bei der Herstellung der plastisch geformten Folie verwendet wird, die gleiche räumliche Gestalt wie der geformte Träger aufweist.

15. . Verfahren nach Anspruch 13 oder 14, **dadurch gekennzeichnet, daß** die Verklebung der Folie mit dem geformten Träger vollflächig oder teilweise oder punktuell erfolgt.

16. . Verfahren zur Herstellung einer Verpackung aus einem geformten Träger und der biaxial gestreckten Folie nach einem Verfahren gemäß einem der Ansprüche 1 bis 12 **dadurch gekennzeichnet, dass** die Folie bei erhöhter Temperatur plastisch geformt wird und dabei in eine Form eingesetzt wird, welche ihrerseits den geformten Träger der Verpackung bildet und beim plastischen Formen der biaxial verstreckten Folie eine Haftung zwischen der Oberfläche des geformten Trägers und der Oberfläche der Folie erzeugt wird.

17. . Verfahren nach Anspruch 16, **dadurch gekennzeichnet, daß** die biaxial verstreckte Folie eine mehrschichtige Folie ist und mindestens eine Deckschicht aufweist, welche bei derjenigen Temperatur, bei welcher der Formprozeß erfolgt siegelfähig gegenüber der Oberfläche des geformten Trägers ist und die siegelfähige Deckschicht beim Formen dem geformten Träger, welcher die Form bildet, zugewandt ist.

18. . Verfahren nach Anspruch 17, **dadurch gekennzeichnet, daß** die biaxial verstreckte Folie eine beschichte Folie ist und mindestens eine Beschichtung aufweist, welche bei derjenigen Temperatur, bei welcher der Formprozeß erfolgt haftfähig oder klebrig gegenüber der Oberfläche des geformten Trägers ist und die Beschichtung beim Formen dem geformten Träger, welcher die Form bildet, zugewandt ist.

19. . Verfahren nach einem oder mehreren der Ansprüche 16 bis 18, **dadurch gekennzeichnet, daß** der geformte Träger beim Formen der biaxial verstreckten Folie ebenfalls erwärmt wird.

20. .Verfahren nach Anspruch 16 bis 19, **dadurch gekennzeichnet, daß** der geformte Träger aus einem porösen Material ist und die Form eines Behältnisses, vorzugsweise eines Bechers oder einer Schale aufweist und die Formung der Folie mittels Tiefziehen erfolgt.

21. . Verpackung hergestellt nach einem der Ansprüche 16 bis 20.

22. . Verfahren zur Herstellung einer Blisterverpackung aus einem flächigen Träger und der biaxial gestreckten Folie nach einem Verfahren gemäß einem der Ansprüche 1 bis 12 , **dadurch gekennzeichnet, dass** die Folie plastisch geformt wird und anschließend mittels Laminierung, Verklebung oder Siegelung mit dem flächigen Träger verbunden wird.

23. . Blisterverpackung hergestellt nach Anspruch 22.

## Claims

1. A method for plastic deformation of a biaxially stretched foil, **characterized in that** the biaxially stretched foil includes at least one base layer containing at least one polymer I consisting of at least one hydroxycarboxylic acid and ≥ 0.2% by weight relative to the weight of the layer, further containing a thermoplastic polymer II, different from polymer I, and that this foil is plastically formed by the effect of pneumatic forces and/or by the mechanical effect of forming tools, and wherein the thermoplastic polymer II is a polypropylene or a polyethylene and the foil has a thickness from 5 to 80 µm before forming.

2. The method as recited in claim 1, **characterized in that**
the biaxially oriented foil is heated to a temperature from 40 to 150°C, preferably a temperature from 60 to 130°C, before or during forming.

3. The method as recited in claim 1, **characterized in that**
the biaxially oriented foil is formed at a temperature from 15 to < 40°C.

4. The method as recited in claims 1, 2 or 3, **characterized in that** the polymer I is a polylactic acid.

5. The method as recited in claim 4, **characterized in that**
the polymer I is a polylactic acid that includes 80 - 100% by weight L-lactic acid units and 0 to 20% by weight D-lactic acid units or other polyhydroxycarboxylic acid units.

6. The method as recited in claim 5, **characterized in that** the propylene polymer is a propylene homopolymer or a propylene copolymer, and that the polyethylene polymer is an HDPE, an LDPE or an MDPE.

7. The method as recited in claims 1 to 6, **characterized in that** the base layer contains the polymer I in a quantity from 85 to 99.8% by weight, preferably 90 to 99% by weight, and the polymer II in a quantity from 0.5 to 15% by weight, preferably 1 to 10% by weight, relative to the layer in each case.

8. The method as recited in claims 1, 2, or 4 to 7, **characterized in that** the biaxially oriented foil is heated to the elevated temperature by IR radiators and/or hot air and/or hot steam.

9. The method as recited in claims 1 to 8, **characterized in that** the pneumatic forces act on the biaxially oriented foil in the form of underpressure or overpressure.

10. The method s recited in claims 1 to 9, **characterized in that** forming of the biaxially oriented foil is performed by deep drawing.

11. The method as recited in claims 1 to 10, **characterized in that** the biaxially oriented foil has a thickness from 5 to 20 µm before forming.

12. The method as recited in claims 1 to 11, **characterized in that** the biaxially oriented foil is fitted positively on the form under the effect of the pneumatic and/or mechanical forces.

13. A method for producing a packaging material from a formed carrier and a biaxially stretched and plastically formed foil, **characterized in that** the biaxially stretched foil has been plastically formed as recited in any of claims 1 to 12, and after forming is applied to a carrier having the same shape by lamination, adhesion or sealing.

14. The method as recited in claim 13, **characterized in that** the form used in production of the plastically formed foil has the same dimensional conformation as the formed carrier.

15. The method as recited in claims 13 or 14, **characterized in that** adhesion of the foil to the formed carrier is performed over all or part of the surface or at points.

16. The method for producing a packaging material from a formed carrier and the biaxially stretched foil, **characterized in that** the foil is plastically formed at an elevated temperature according to a method as recited in any of claims 1 to 12, and in this context is introduced into a form that in turn constitutes the moulded carrier of the packaging, and that bonding between the surface of the moulded carrier and the a surface of the foil occurs during plastic forming of the biaxially stretched foil.

17. The method as recited in claim 16, **characterized in that** the biaxially stretched foil is a multilayer foil and has at least one cover layer that is capable of forming a seal with the surface of a moulded carrier at the temperature at which the forming process takes place, and the cover layer that is capable of forming a seal faces towards the moulded carrier that constitutes the form during forming.

18. The method as recited in claim 17, **characterized in that** the biaxially stretched foil is a coated foil and has at least one coating is capable of forming a sticking or adhering to the surface of a moulded carrier at the temperature at which the forming process takes place, and the coating faces towards the moulded carrier that constitutes the form during forming.

19. The method as recited in one or more of claims 16 to 18, **characterized in that** the moulded carrier is also heated during forming of the biaxially stretched foil.

20. The method as recited in claims 16 to 19, **characterized in that** the moulded carrier is made from a porous material and has the shape of a receptacle, preferably a cup or bowl, and that the foil is formed by deep drawing.

21. The packaging produced in accordance with any of claims 16 to 20.

22. A method for producing a blister pack from a flat carrier the biaxially stretched foil, **characterized in that**
the foil is plastically formed according to a method as recited in any of claims 1 to 12 and is subsequently bonded with the flat carrier by lamination, adhesion or sealing.

23. The blister pack produce in accordance with claim 22.

## Revendications

1. Procédé de déformation plastique d'une feuille biaxialement orientée, **caractérisé en ce que** ladite feuille biaxialement orientée comprend au moins une couche de base qui contient au moins un polymère I constitué d'au moins un acide carboxylique hydroxylé et > 0,2 % en poids, par rapport au poids de ladite couche, d'un polymère II thermoplastique qui est différent du polymère I, ladite feuille étant déformée plastiquement par l'action de forces pneumatiques et/ou par l'action mécanique d'outils de mise en forme et le polymère thermoplastique II étant un polypropylène ou un polyéthylène et la feuille présentant, avant la mise en forme, une épaisseur comprise entre 5 et 80 µm.

2. Procédé selon la revendication 1, **caractérisé en ce que** ladite feuille biaxialement orientée est chauffée, avant ou pendant la mise en forme, à une température comprise entre 40 et 150 °C, de préférence à une température comprise entre 60 et 130 °C.

3. Procédé selon la revendication 1, **caractérisé en ce que** la feuille biaxialement orientée est mise en forme à une température comprise entre 15 et < 40 °C.

4. Procédé selon la revendication 1, 2 ou 3, **caractérisé en ce que** le polymère I est un acide polylactique.

5. Procédé selon la revendication 4, **caractérisé en ce que** le polymère I est un acide polylactique comportant 80 à 100 % en poids d'unités d'acide L-lactique et 0 à 20 % en poids d'unités d'acide D-lactique ou d'autres unité d'acides carboxyliques hydroxylés.

6. Procédé selon la revendication 5, **caractérisé en ce que** le polymère de propylène est un homopolymère de propylène ou un copolymère de propylène et le polymère de polyéthylène est un PE-HD, un PE-BD ou un PE-MD.

7. Procédé selon la revendication 1 à 6, **caractérisé en ce que** la couche de base contient, par rapport à la couche, le polymère I dans une quantité comprise entre 85 et 99,8 % en poids, de préférence entre 90 et 99 % en poids, et le polymère II dans une quantité comprise entre 0,5 et 15 % en poids, de préférence entre 1 et 10 % en poids.

8. Procédé selon la revendication 1, 2 ou 4 à 7, **caractérisé en ce que** la feuille biaxialement orientée est chauffée à la température élevée au moyen de lampes IR et/ou d'air chaud et/ou de vapeur chaude.

9. Procédé selon la revendication 1 à 8, **caractérisé en ce que** lesdites forces pneumatiques agissent sur la feuille biaxialement orientée sous forme d'une pression négative ou d'une surpression.

10. Procédé selon la revendication 1 à 9, **caractérisé en ce que** la mise en forme de la feuille biaxialement orientée est réalisée par emboutissage.

11. Procédé selon la revendication 1 à 10, **caractérisé en ce que** la feuille biaxialement orientée présente, avant la mise en forme, une épaisseur comprise entre 5 et 20 µm.

12. Procédé selon la revendication 1 à 11, **caractérisé en ce que** la feuille biaxialement orientée, sous l'action des forces pneumatiques et/ou mécaniques, vient parfaitement épouser le moule.

13. Procédé de fabrication d'un emballage à partir d'un support mis en forme et d'une feuille biaxialement orientée et mise en forme plastiquement, **caractérisé en ce que** la feuille biaxialement étirée a été mise en forme plastiquement selon un procédé selon l'une des revendications 1 à 12 et qu'elle est, suite à la mise en forme, appliquée par laminage, collage ou scellage sur un support d'une forme correspondante.

14. Procédé selon la revendication 13, **caractérisé en ce que** le moule qui est utilisé lors de la fabrication de la feuille mise en forme plastiquement présente les mêmes dimensions dans l'espace que ledit support mis en forme.

15. Procédé selon la revendication 13 ou 14, **caractérisé en ce que** le collage de la feuille sur ledit support mis en forme est réalisé sur l'ensemble ou sur une partie de sa surface, ou par points.

16. Procédé de fabrication d'un emballage à partir d'un support mis en forme et de ladite feuille biaxialement orientée, **caractérisé en ce que** ladite feuille est mise en forme plastiquement à une température élevée selon un procédé selon l'une des revendications 1 à 12 et qu'elle est en même temps insérée dans un moule qui constitue, à son tour, ledit support mis en forme de l'emballage et que, lors de la mise en forme plastique de la feuille biaxialement orientée, une adhésion est générée entre la surface du support mis en forme et la surface de ladite feuille.

17. Procédé selon la revendication 16, **caractérisé en ce que** la feuille biaxialement orientée est une feuille multicouche et présente au moins une couche de couverture qui, à la température à laquelle le processus de mise en forme est réalisé, est apte au scellage vis-à-vis de la surface dudit support mis en forme et que, lors de la mise en forme, ladite couche de couverture apte au scellage fait face au support mis en forme qui constitue le moule.

18. Procédé selon la revendication 17, **caractérisé en ce que** la feuille biaxialement orientée est une feuille revêtue et présente au moins un revêtement qui, à la température à laquelle le processus de mise en forme est réalisé, est apte à l'adhésion ou collant vis-à-vis de la surface dudit support mis en forme et que, lors de la mise en forme, ledit revêtement fait face au support mis en forme qui constitue le moule.

19. Procédé selon l'une ou plusieurs des revendications 16 à 18, **caractérisé en ce que** ledit support mis en forme est également chauffé lors de la mise en forme de ladite feuille biaxialement orientée.

20. Procédé selon la revendication 16 à 19, **caractérisé en ce que** ledit support mis en forme est constitué d'un matériau poreux et présente la forme d'un récipient, de préférence d'un gobelet ou d'une barquette et que la mise en forme de ladite feuille est réalisée par emboutissage.

21. Emballage, fabriqué selon l'une des revendications 16 à 20.

22. Procédé de fabrication d'un emballage blister à partir d'un support étalé en surface et ladite feuille biaxialement orientée, **caractérisé en ce que** ladite feuille est mise en forme plastiquement selon un procédé selon l'une des revendications 1 à 12 et qu'elle est ensuite liée audit support étalé en surface par laminage, collage ou scellage.

23. Emballage blister, fabriqué selon la revendication 22.
